(19) Europäisches Patentamt
European Patent Office
Office européen des brevets

(11) **EP 2 995 923 A1**

(12) **EUROPEAN PATENT APPLICATION**
published in accordance with Art. 153(4) EPC

(43) Date of publication:
**16.03.2016   Bulletin 2016/11**

(51) Int Cl.:
*G01N 1/00* [(2006.01)]          *G01N 1/22* [(2006.01)]
*G01N 30/04* [(2006.01)]       *G01N 30/72* [(2006.01)]

(21) Application number: **14794667.7**

(22) Date of filing: **27.03.2014**

(86) International application number:
**PCT/JP2014/058796**

(87) International publication number:
**WO 2014/181600 (13.11.2014 Gazette 2014/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority:   **10.05.2013   JP 2013099875**

(71) Applicant: **Shimadzu Corporation**
**Kyoto-shi, Kyoto-fu 604-8511 (JP)**

(72) Inventors:
• **OKAMURA, Yoshiyuki**
**Kyoto-city**
**Kyoto 604-8511 (JP)**
• **KAKIO, Naoshi**
**Kyoto-city**
**Kyoto 604-8511 (JP)**

(74) Representative: **Webster, Jeremy Mark et al**
**Mewburn Ellis LLP**
**City Tower**
**40 Basinghall Street**
**London EC2V 5DE (GB)**

(54) **MATERIAL-ODOR-ASSAYING DEVICE, ASSAYING RETAINER USED THEREIN, AND MATERIAL-ODOR-TESTING METHOD USED WITH SAID MATERIAL-ODOR-ASSAYING DEVICE**

(57)    The invention provides a sample odor testing device with which one sample is measured, and then, a next sample can be immediately measured. The sample odor testing device (1) is provided with a first attachment portion (12) to which a sample holder (31) is to be attached and a second attachment portion (11) to which a pressing body (21) is to be attached, where the sample holder (31) has a sample mounting base (31a) on which a sample is to be mounted and a holder attachment portion (31b) for the attachment to the first attachment portion (12), and the pressing body (21) has a pressing portion (21b) for applying a load to the sample and a pressing body attachment portion (21c) for the attachment to the second attachment portion (11) . The sample odor testing device (1) is further provided with a bag body (40) where a first hole (42) through which the holder attachment portion (31b) is to penetrate and a second hole (41) through which the pressing body attachment portion (21c) is to penetrate are created. The pressing portion (21b), the sample mounting base (31a) and a sample are arranged within the bag body (40).

FIG. 1

EP 2 995 923 A1

**Description**

TECHNICAL FIELD

The present invention relates to a sample odor testing device for measuring the odor released from a sample such as of a food product, a sample holder used therein, and a sample odor examination method.

BACKGROUND ART

When a person chews a food product, aromatic components are released from the food product within the oral cavity and ride on the flow of exhaled air so as to reach the inside of the nasal cavity, which stimulates the olfactory senses. In addition, the chewing characteristics depend on the person.

Upon the understanding of such chewing characteristics, chewing modeling devices (sample odor testing devices) with which the odor released during chewing can be measured have been disclosed (see Non-Patent Document 1). In these chewing modeling devices, a strength test is carried out on a target sample within a sealed container in cylindrical form made of a transparent material such as glass or acryl, and after that, a Tenax (registered trademark) tube is connected, or a PTR-MS or the like is linked, to the inside of the sealed container so as to purge the inside with an inert gas (such as a nitrogen gas), and thus, the odor released during the imitated chewing is measured.

Meanwhile, material testing devices for carrying out a three-point bending strength test have been disclosed as testing devices (see Patent Document 1). FIG. 8 is a schematic diagram showing the structure of a material testing device for carrying out a three-point bending strength test. Here, one direction that is horizontal relative to the ground is the X direction, the direction that is horizontal relative to the ground and perpendicular to the X direction is the Y direction, and the direction that is perpendicular to the X direction and the Y direction is the Z direction.

A material testing device 101 is provided with: a device base 7; a housing 14 for supporting two threaded rods 5, 13 so as to be rotatable with the upward and downward directions (Z direction) being the rotational axis; a support base 112 provided and fixed in the center portion of the device base 7 on the upper side; a crosshead 8 that engages the threaded rods 5, 13 so as to be movable in the upward and downward directions relative to the device base 7 as the threaded rods 5, 13 rotate; a load cell 111 provided and fixed in the center portion of the crosshead 8 on the lower side; and an operation control unit 3 for controlling and processing the system.

A motor 4 controlled through a control signal from the operation control unit 3, a belt 61 for conveying the rotational force from the motor 4 to the threaded rods 5, 13, and a gear mechanism 6 to which an interlocking pulley 62 is linked are arranged inside the device base 7. As a result, the motor 4 can rotate so as to rotate the two threaded rods 5, 13, thereby moving the crosshead 8 in the upward and downward directions relative to the device base 7.

Two supports 130 in plate form that are aligned in the X direction so as to be parallel to each other are attached to the upper surface of the support base 112. Meanwhile, one plunger (pressure applying body) 120 is attached to the lower surface of the load cell 111. A test piece $S_n$ in plate form is placed between the supports 130 and the plunger 120 with the upper ends of the two supports 130 being the fulcrums and with the lower end of the plunger 120 being the loading point so that a load W can be applied to a predetermined portion of the test piece $S_n$.

By using this material testing device 101, the moment when the test piece $S_n$ is cracked and broken is detected.

PRIOR ART DOCUMENTS

Patent Document

Patent Document 1: Japanese Unexamined Patent Publication 2012-251901

Non-Patent Document

Non-Patent Document 1: "Measurement of Flavor Released During Chewing of a Food Product," Chemistry and Biology, Vol. 47, No. 9, 2009, pgs. 624-629

SUMMARY OF THE INVENTION

Problem to Be Solved by the Invention

When one sample $S_1$ has been measured and a next sample $S_2$ is to be measured in the above-described chewing modeling device, it is troublesome to remove the broken sample $S_1$ and wash off the odor absorbed within the sealed container, and thus, such a problem arises that the efficiency in the measurement work is poor.

Means for Solving Problem

In order to solve the above-described problem, the present inventors examined the sample odor testing device so as to find a way to improve the device so that after one sample $S_1$ has been measured, a next sample $S_2$ can be immediately measured. Thus, the inventors decided to use a sample bag (bag body) made of a transparent material in place of the sealed container in cylindrical form made of a transparent material such as glass or acryl. As a result, since the sample bag was disposable, the removal of the odor absorbed within the sealed container was no longer troublesome. Then, a test retainer that was provided with a pressing body having a plunger (pressing portion) and a threaded portion (attachment portion) and a sample holder having a sample mounting base and a threaded portion (attachment portion) was fabricated, and the sample mounting base, the plunger and a sample $S_n$ were arranged within the sample bag. As a result, it became possible to clean only the plunger and the sample mounting base or to easily replace the plunger and the sample mounting base with new ones.

In view of the above-described facts, the present inventors found that it is effective to use a sample bag (bag body) and to arrange a plunger (pressing portion), a sample mounting base and a sample $S_n$ within the sample bag. The inventors also found that it is preferable for the form of the sample mounting base to be a disc having a diameter that is 1.5 times greater than the diameter of the sample, and furthermore for the disc to be provided with a trench having a depth that is 15% of the height of the sample on the upper surface in order to avoid moving the sample $S_n$ when being pressed. Furthermore, the inventors found that it is preferable for the plunger to have the same height as the sample.

That is to say, the sample odor testing device according to the present invention is provided with: a first attachment unit to which a sample holder is to be attached; and a second attachment unit to which a pressing body is to be attached, wherein the above-described sample holder has a sample mounting base on which a sample is to be mounted and a holder attachment portion for the attachment to the above-described first attachment unit, and the above-described pressing body has a pressing portion for applying a load to a sample and a pressing body attachment portion for the attachment to the above-described second attachment unit, and is characterized by further including a bag body in which a first hole through which the above-described holder attachment portion penetrates and a second hole through which the above-described pressing body attachment portion penetrates are created, wherein the above-described pressing body, the above-described sample mounting base and a sample are arranged within the above-described bag body.

Effects of the Invention

In the sample odor testing device according to the present invention, a bag body is used so that a pressing portion, a sample mounting base and a sample are arranged within the bag body, and therefore, in the case where one sample has been measured and then a next sample is to be measured, it is easy to remove or replace the sample holder and the pressing portion, which increases the measurement efficiency.

(Other Means for Solving Problem and Effects Thereof)

In addition, in the above-described invention, the above-described bag body may be made of a transparent resin, and the above-described sample mounting base and the above-described pressing body may be made of a resin.

Here, a fluorine resin can be cited as an example of a transparent resin used for the bag body. In addition, polytetrafluoroethylene (PTFE) can be cited as an example of a resin used for the sample mounting base and the pressing body.

Furthermore, the above-described invention may be provided with an XY stage, and the above-described sample holder may be attached to the above-described first attachment unit with the above-described XY stage in between.

Moreover, in the above-described invention, the form of the above-described sample mounting base may be a disc having a diameter that is 1.3 times or more greater and 1.7 times or less greater than the diameter of the sample, a trench having a depth of 10% or greater and 20% or smaller of the height of the sample may be created on the upper surface of the disc, and the above-described pressing portion may have a height that is 0.5 times or more greater and 1.5 times or less greater than the height of the sample.

In this sample odor testing device, a trench is created, and therefore, the material can be prevented from moving when the material is pressed.

In addition, the test retainer according to the present invention is to be used in a sample odor testing device that is provided with: a first attachment unit to which a sample holder is to be attached; and a second attachment unit to which a pressing body is to be attached, and the test retainer is characterized by including: a sample holder having a sample mounting base on which a sample is to be mounted and a holder attachment portion for the attachment to the above-described first attachment unit; a pressing body having a pressing portion for applying a load to a sample and a pressing body attachment portion for the attachment to the above-described second attachment unit; and a bag body in which a first hole through which the above-described holder attachment portion penetrates and a second hole through which the above-described pressing body attachment portion penetrates are created.

Furthermore, the sample odor examination method according to the present invention is a sample odor examination method to be used for a sample odor testing device that is provided with: a first attachment unit to which a sample holder is to be attached; and a second attachment unit to which a pressing body is to be attached, wherein the above-described sample holder has a sample mounting base on which a sample is to be mounted and a holder attachment portion for the attachment to the above-described first attachment unit, and the above-described pressing body has a pressing portion for applying a load to a sample and a pressing body attachment portion for the attachment to the above-described second attachment unit, and the sample odor examination method is characterized by including: a preparation step of preparing a bag body in which a first hole through which the above-described holder attachment portion penetrates and a second hole through which the above-described pressing body attachment portion penetrates are created; an arrangement step of arranging the above-described pressing portion, the above-described sample mounting base and a sample within the above-described bag body so that the above-described sample holder is attached to the above-described first attachment unit, and at the same time, the above-described pressing body is attached to the above-described second attachment unit; an examination step of moving the above-described sample holder and/or the above-described pressing body; and an analysis step for introducing a gas that exists within the above-described bag body into an analyzing device.

Here, the " analyzing device " may be any device with which the odor released from a sample can be measured, and gas chromatography (GC), a gas chromatography mass spectrometer (GCMS), high performance liquid chromatography (HPLC) and an odor identifying device (FF) can be cited as examples of the analyzing device.

BRIEF DESCRIPTIONS OF THE DRAWINGS

FIG. 1 is a schematic diagram showing the structure of the sample odor testing device according to an embodiment of the present invention;
FIG. 2 is a cross-sectional diagram showing an enlargement of A in FIG. 1;
FIG. 3 is a cross-sectional diagram showing an enlargement of B in FIG. 1;
FIG. 4 is a plan diagram showing the sample holder and the XY stage;
FIG. 5 is an exploded cross-sectional diagram showing the same as FIG. 2;
FIG. 6 is an exploded cross-sectional diagram showing the same as FIG. 3;
FIG. 7 is a perspective diagram showing a sample bag and a clip; and

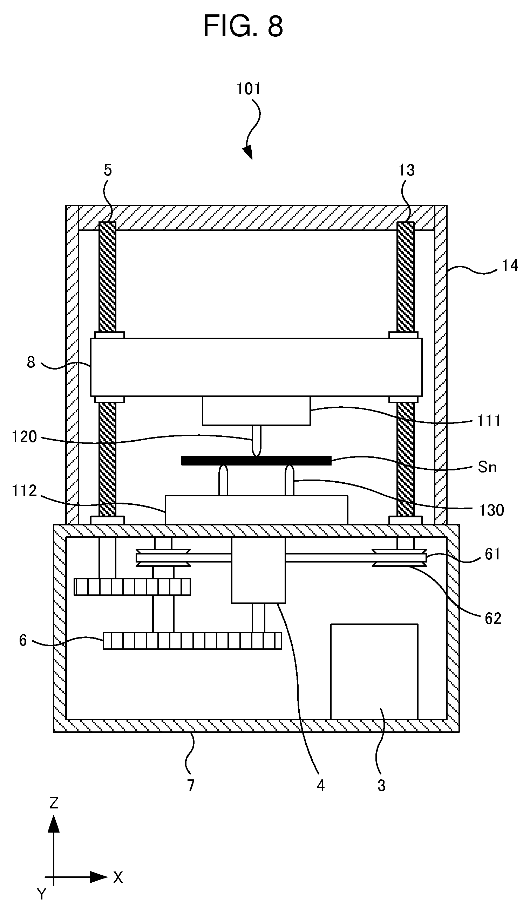

FIG. 8 is a schematic diagram showing the structure of the material testing device for carrying out a three-point bending strength test.

PREFERRED EMBODIMENTS OF THE INVENTION

In the following, an embodiment of the present invention is described in reference to the drawings. Here, the present invention is not limited to the below-described embodiment, and it is needless to say that various modifications are included as long as the gist of the present invention is not deviated from.

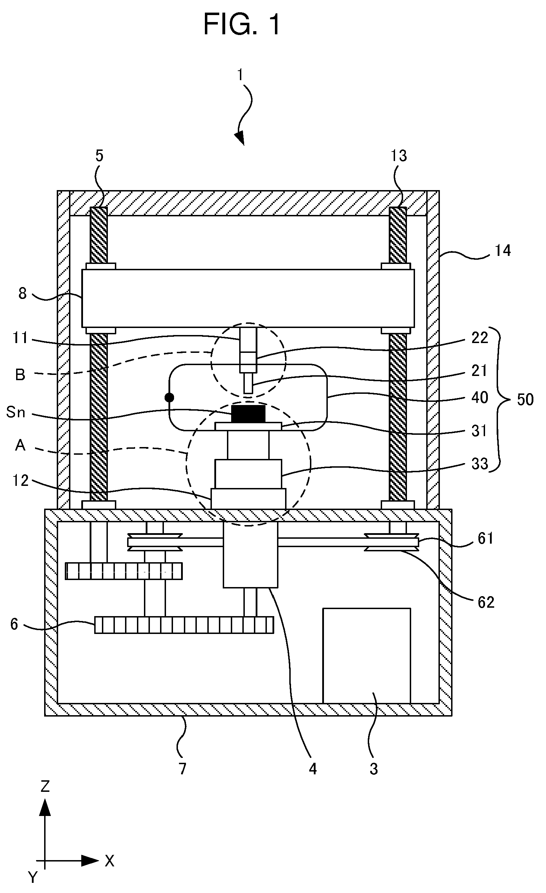

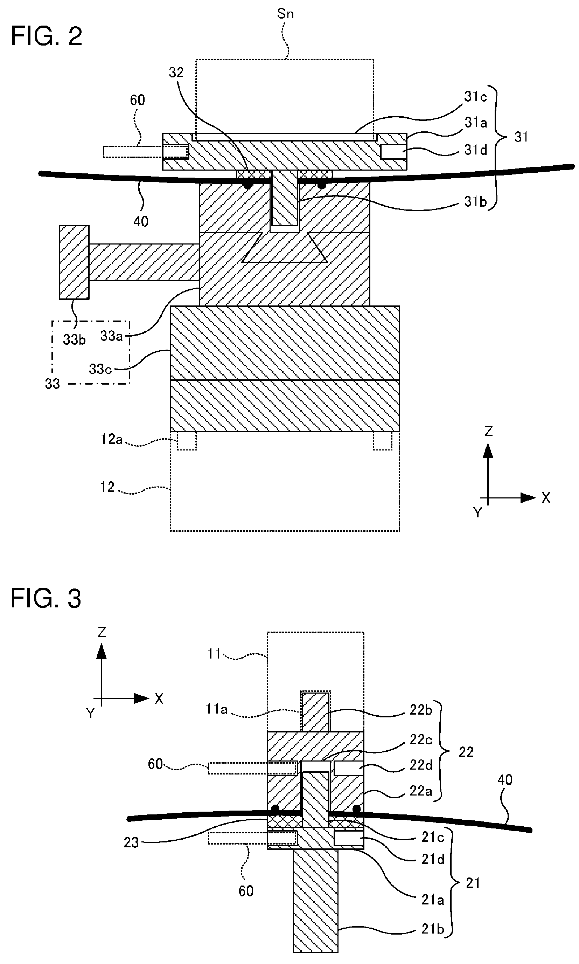

FIG. 1 is a schematic diagram showing the structure of the sample odor testing device according to an embodiment of the present invention. FIG. 2 is a cross-sectional diagram showing an enlargement of A in FIG. 1, and FIG. 3 is a cross-sectional diagram showing an enlargement of B in FIG. 1. Here, the same symbols are attached to the same components as in the material testing device 101. The sample $S_n$ in this embodiment has a cylindrical form with a diameter of 40 mm and a height of 15 mm. A case where the odor released from the sample $S_n$ is measured with a GCMS using solid phase micro extraction (SPME) is described below.

The sample odor testing device 1 is provided with: a device base 7; a housing 14 for supporting two threaded rods 5, 13 so as to be rotatable with a rotational axis being in the upward and downward directions (Z direction); a first attachment unit 12 formed in the center portion on the upper surface of the device base 7; a crosshead 8 that engages the threaded rods 5, 13 so as to be able to move in the upward and downward directions relative to the device base 7 when the threaded rods 5, 13 rotate; a load cell (second attachment unit) 11 provided in and fixed to the center portion of the lower surface of the crosshead 8; a test retainer 50 having a sample holder 31, an XY stage 33, a pressing body 21, an adaptor body 22, and a two liter sample bag (bag body) 40; and an operation control unit 3 for controlling and processing the system.

It is possible to fix the XY stage 33 to the upper surface of the first attachment unit 12 using four screws 12a. In addition, a threaded hole 11a (having a diameter of 6 mm, for example) is created upwardly from the lower surface in the center portion of the load cell 11, which makes the adaptor body 22 removable using a screw mechanism.

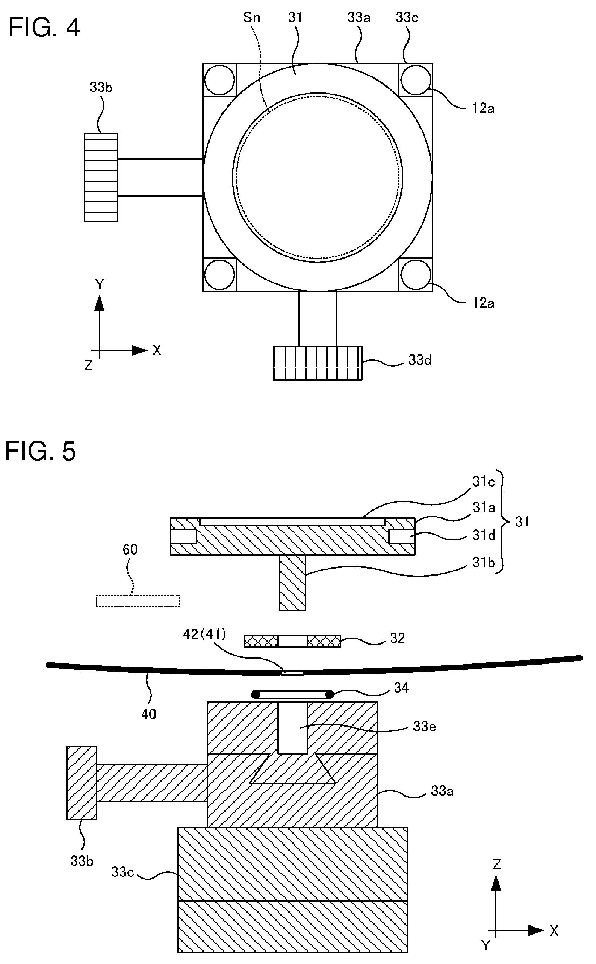

FIG. 4 is a plan diagram showing the sample holder 31 and the XY stage 33. FIG. 5 is an exploded cross-sectional diagram showing the same as FIG. 2. The XY stage 33 has an X stage 33c in rectangular parallelepiped form (60 mm x 40 mm x 8 mm, for example) made of aluminum (metal) to be fixed to the first attachment unit 12 and a Y stage 33a in rectangular parallelepiped form (40 mm x 60 mm x 22 mm, for example) made of aluminum (metal) that is arranged above the X stage. A handle 33d is formed so as to protrude from the X stage 33c in the Y direction so that the user can rotate the handle 33d in order to move the upper portion of the X stage 33c in the X direction relative to the lower portion of the X stage 33c. In addition, a handle 33b is formed so as to protrude in the X direction from the Y stage 33a so that the user can rotate the handle 33b in order to move the upper portion of the Y stage 33a in the Y direction relative to the lower portion of the Y stage 33a. Thus, one threaded hole 33e (having a diameter of 6 mm, for example) is created downwardly from the upper surface of the Y stage 33a in the center portion, which makes the sample holder 31 removable using a screw mechanism.

The sample holder 31 has a sample mounting base 31a in disc form made of PTFE (having a diameter of 60 mm and a height of 10 mm, for example) and a threaded portion 31b made of PTFE (holder attachment portion having a diameter of 6 mm, for example), which protrudes downwardly from the lower surface of the sample mounting base 31a in the center portion. In addition, a trench 31c in cylindrical form, which has a depth that is 15% of the height of the sample $S_n$ and a diameter that is greater than the diameter of the sample $S_n$ by 2 mm (as an example, a diameter of 42 mm and a depth of 3 mm) , is created in the upper surface of the sample mounting base 31a. As a result, the sample $S_n$ having a diameter of 40 mm and a height of 15 mm can be mounted within the trench 31c.

In addition, a handle hole 31d in cylindrical form is created laterally on the side of the sample mounting base 31a.

In this sample holder 31, a threaded portion 31b is inserted through a washer 32 in annular form (having a thickness of 2 mm, for example) made of PTFE, inserted through the first hole 42 of the sample bag 40 and inserted through an O-ring 34 made of rubber, and after that inserted into a threaded hole 33e. At this time, the user inserts a handle 60 in rod form into the handle hole 31d and rotates the threaded portion 31b using the handle 60 in order to secure the threaded portion 31b in the threaded hole 33.

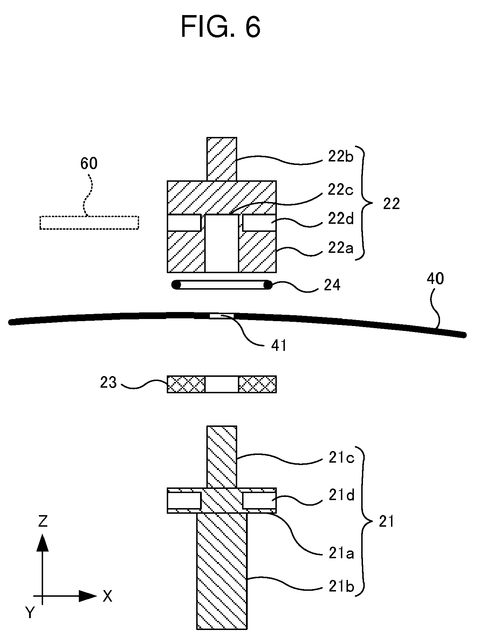

Next, FIG. 6 is an exploded cross-sectional diagram showing the same as FIG. 3. An adaptor body 22 has a main body portion 22a in cylindrical form (having a diameter of 22 mm and a height of 15 mm, for example) made of aluminum (metal) and a threaded portion 22b (having a diameter of 6 mm, for example) made of aluminum that protrudes upward from the upper surface of the main body portion 22a in the center portion. In addition, one threaded hole 22c (having a diameter of 6 mm, for example) is created upwardly from the lower surface of the main body portion 22a in the center portion, which makes the pressing body 21 removable using a screw mechanism.

In addition, a handle hole 22d in cylindrical form is created laterally on the side of the main body portion 22a.

In the adaptor body 22, the threaded portion 22b can be inserted into the threaded hole 11a of the load cell 11. At this time, the user can insert the handle 60 in rod form into the handle hole 22b and rotate the threaded portion 22b using the handle 60 in order to secure the threaded portion 22b in the screw hole 11a.

The pressing body 21 has a main body portion 21a in cylindrical form (having a diameter of 22 mm and a height of 5 mm, for example) made of PTFE, a plunger (pressing portion) in cylindrical form (having a diameter of 8 mm and a height of 20 mm, for example) made of PTFE that protrudes downward from the lower surface of the main body portion 21a in the center portion, and a threaded portion 21c made of PTFE (pressing body attachment portion having a diameter of 6 mm, for example) that protrudes upward from the upper surface of the main body portion 21a in the center portion.

In addition, a handle hole 21d in cylindrical form is created laterally on the side of the main body portion 21a.

In the pressing body 21, the threaded portion 21c is inserted through a washer 23 in annular form (having a thickness of 2 mm, for example) made of PTFE, inserted through the second hole 41 of the sample bag 40, and inserted through an O-ring 24 made of rubber, and after that inserted into the threaded hole 22c. At this time, the user can insert a handle 60 in rod form into the handle hole 21d and rotate the threaded portion 21c using the handle 60 in order to secure the threaded portion 21c in the threaded hole 22c.

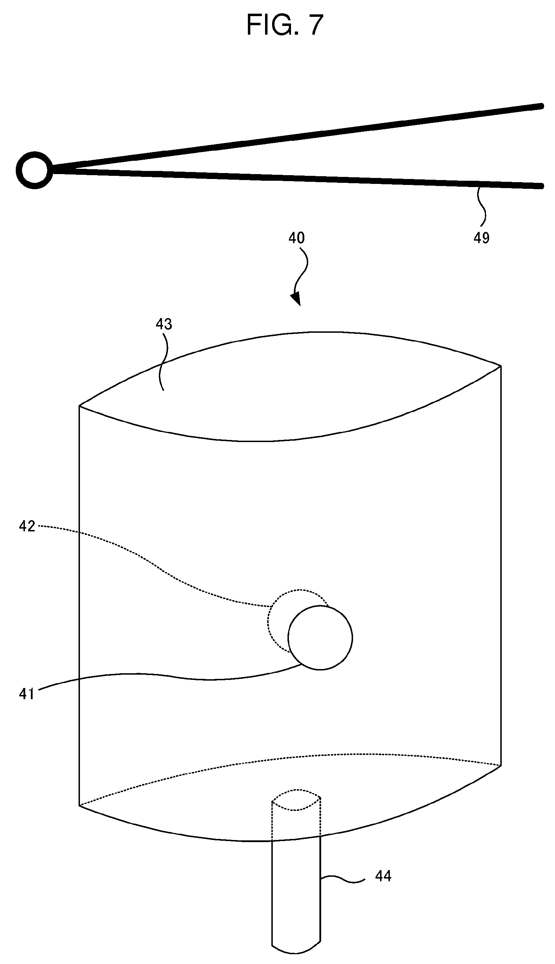

Next, FIG. 7 is a perspective diagram showing a sample bag 40 and a clip 49. The sample bag 40 is a bag body made of transparent vinyl (three sides of a first vinyl sheet of 215 mm $\times$ 250 mm and three sides of a second vinyl sheet of 215 mm $\times$ 250 mm are pasted together to create an opening 43, for example), where a first hole 42 in circular form (having a diameter of 6 mm, for example) through which the threaded portion (holder attachment portion) 31b is to penetrate is created in the center portion of the first vinyl sheet and a second hole 41 in circular form (having a diameter of 6 mm, for example) through which the threaded portion (pressing body attachment portion) 21c is to penetrate is created in the center portion of the second vinyl sheet. In addition, a tube 44 for linking the bag body to the GCMS is provided at the bottom of the sample bag 40. Here, the clip 49 is to close the opening 43.

Here, the sample odor examination method for measuring the odor released from a sample $S_n$ using the sample odor testing device 1 according to the embodiment of the present invention is described. The sample odor examination method includes: a preparation step (A) of preparing a sample $S_n$, a sample bag 40 and a test retainer 50; an arrangement step (B) of arranging the sample $S_n$, the sample bag 40 and the test retainer 50 in predetermined locations; an examination step (C) of moving the pressing body 21 in the upward and downward directions relative to the sample $S_n$; and an

analysis step (D) of introducing the gas that exists within the sample bag 40 into the GCMS.

(A) Preparation Step

A user prepares a sample $S_1$, a sample bag 40 and a test retainer 50. At this time, it is preferable to prepare such a test retainer 50 where the form of the sample mounting base 31a in the test retainer 50 is a disc having a diameter that is 1.3 times or more greater and 1.7 times or less greater than the diameter of the sample $S_1$, and a trench 31c having a depth that is 10% or greater and 20% or smaller than the height of the sample $S_1$ is created on the upper surface of the disc. Particularly, it is preferable for the disc to have a diameter that is 1.5 times greater than the diameter of the sample $S_1$ and for a trench 31c having a depth that is 15% of the height of the sample $S_1$ to be created on the upper surface of the disc. Furthermore, it is preferable to prepare such a test retainer 50 where the plunger 21b has a height that is 0.5 times greater or more and 1.5 times greater or less than the height of the sample $S_1$, and in particular, it is preferable for the plunger 21b to have the same height as the sample $S_1$.

(B) Arrangement Step

The user arranges the sample $S_1$, the sample bag 40 and the test retainer 50 in predetermined locations. Concretely, the user first attaches the XY stage 33 to the first attachment portion 12, and at the same time attaches the adaptor body 22 to the load cell (second attachment portion) 11. Next, the sample $S_1$ is mounted within the trench 31c, the threaded portion 31b is inserted through the washer 32, and this assembly is contained within the sample bag 40 through the opening 43 of the sample bag 40 . After that, the threaded portion 31b is inserted through the first hole 42 of the sample bag 40 and through an O-ring so as to be secured in the screw hole 33e. Next, the threaded portion 21c is inserted through the washer 23, and the pressing body 21 is contained within the sample bag 40 through the opening 43 of the sample bag 40. After that, the threaded portion 21c is inserted through the second hole 41 of the sample bag 40 and through an O-ring so as to be secured in the screw hole 22c. Next, the opening 43 of the sample bag 40 is closed using the clip 49. Finally, the plunger 21 is arranged 5 mm to 10 mm above the sample $S_n$ of which the location is adjusted using the XY stage 33.

(C) Examination Step

The user moves the pressing body 21 in the upward and downward directions relative to the sample $S_1$. The user starts measurement by inputting a measurement start signal into the operation control unit 3 in the state where the locations of the pressing body 21 and the sample $S_1$ have been adjusted through the arrangement step (B). When the measurement start signal is inputted, a control signal is emitted from the operation control unit 3 and the pressing body 21 descends at a constant speed (100 mm/min, for example) for 0.1 minutes. After that, the pressing body 21 ascends at a constant speed for 0.05 minutes and then descends at a constant speed for 0.05 minutes, which is repeated a number of times (four times, for example) . As a result, the plunger 21b chews the sample $S_1$. At this time, an odor is released from the sample $S_1$ and stays within the sample bag 40.

(D) Analysis Step

After the completion of the examination step (C), the user links the tube 44 of the sample bag 40 to the GCMS and purges the inside of the sample bag 40 with an inert gas (nitrogen gas, for example), and thus introduces the gas that exists within the sample bag 40 into the GCMS. As a result, the odor released from the sample $S_1$ is measured.

After the completion of the analysis step (D), the user removes the threaded portion 31b from the screw hole 33e, and at the same time removes the threaded portion 21c from the screw hole 22c. After that, in the case where a next sample $S_2$ is to be measured, a new sample bag 40, a new sample mounting base 31a, a new washer 32, a new pressing body 21 and a new washer 23 are prepared, or a new sample bag 40 is prepared and the sample mounting base 31a, the washers 23, 32 and the pressing body 21 are cleaned. As a result, it is easy to remove or replace the sample holder 31 and the pressing body 21, which increases the measurement efficiency.

<Other Embodiments>

(1) Though the sample odor testing device 1 has such a structure as to be provided with a device base 7, a housing 14, a first attachment portion 12 and a crosshead 8 in the above description, any structure is possible as long as the sample holder and the pressing body can move in the upward and downward directions.

(2) Though the sample odor testing device 1 has such a structure that the pressing body 21 has a plunger 21b with a diameter of 8 mm and a height of 20 mm in the above description, a structure is possible where a plunger in cylindrical form has a different size, and a pressing body having a number of plungers in columnar form of which the sizes are different may be prepared so that an appropriate plunger can be selected depending on the sample.

EXAMPLES

In the following, the present invention is described in further detail using examples; however, the present invention is not limited to the below-described examples.

<Sample>

As a sample $S_1$, a cylinder having a diameter of 40 mm and a height of 15 mm is made of 100 ml of 2.5 wt% agar gel to which 3 μl of a perfume mixture (D-Limonene, Linalool, Methyl 2-octynoate, Citral (mixture of two isomer components), Geraniol, Phenylethyl Alcohol, Cinnamic aldehyde, Eugenol, Cinnamic alcohol) is added. Then, the sample $S_1$ is wrapped and stored at 35°C.

<Test Method>

As for the aroma analysis before breaking the sample $S_1$ (before testing), the preparation step (A), the arrangement step (B) and the analysis step (D) were carried out on the sample $S_1$. That is to say, the state in the arrangement step (B) was maintained for five minutes, and after that, the components were collected by the SPME fibers for five minutes. After that, the sample $S_1$ was taken out from the sample bag 40, and the sample $S_1$ was again wrapped and stored at 35°C.

As for the aroma analysis after breaking the sample $S_1$ (after testing), the arrangement step (B), the examination step (C) and the analysis step (D) were carried out on the same sample $S_1$. In the examination step (C), the plunger 21b descended at 100 mm/min for 0.1 minutes. After that, the plunger 21b ascended at 100 mm/min for 0.05 minutes and descended at 100 mm/min for 0.05 minutes, which was repeated four times. After the completion of the examination step (C), the state was maintained for five minutes and the components were collected by the SPME fibers for five minutes.

<Evaluation Method>

For each aroma component, the peak area value $D_1$ from the aroma analysis before breaking the sample (before testing) and the peak area value $D_2$ from the aroma analysis after breaking the sample (after testing) were found, and the ratio of increase was calculated using formula (1). The results are shown in Table 1.

$$\text{Ratio of Increase (\%)} = ((D_1 - D_2)/D_1) \times 100 \ldots (1)$$

[Table 1]

| Name of Compound | Before Testing | After Testing | Ratio of Increase (%) |
|---|---|---|---|
| D-Limonene | 13449 | 186879 | 1290 |
| Linalool | 889782 | 1233643 | 39 |
| Methyl 2-octynoate | 288159 | 868265 | 201 |
| Citral 1 | 77751 | 123346 | 59 |
| Citral 2 | 99028 | 169816 | 71 |
| Geraniol | 585424 | 849740 | 45 |
| Phenylethyl Alcohol | 50987 | 64309 | 26 |
| Cinnamic aldehyde | 153774 | 241180 | 57 |
| Eugenol | 72003 | 117110 | 63 |
| Cinnamic alcohol | 1540 | 3424 | 122 |

As described above in the present example, the peak area values $D_2$ are greater than the peak area values $D_1$, and thus, the release of each aroma component could be quantitatively confirmed.

INDUSTRIAL APPLICABILITY

The present invention can be applied to sample odor testing devices for measuring the odor released from a sample such as of a food product.

EXPLANATION OF SYMBOLS

| 1 | Sample odor testing device |
|---|---|
| 11 | Load cell (second attachment portion) |
| 12 | First attachment portion |
| 21 | Pressing body |
| 21b | Plunger (pressing portion) |
| 21c | Threaded portion (pressing body attachment portion) |
| 31 | Sample holder |
| 31a | Sample mounting base |
| 31b | Threaded portion (holder attachment portion) |
| 40 | Sample bag (bag body) |
| 41 | Second hole |
| 42 | First hole |

**Claims**

1. A sample odor testing device, comprising:

a first attachment unit to which a sample holder is to be attached; and
a second attachment unit to which a pressing body is to be attached, wherein
said sample holder has a sample mounting base on which a sample is to be mounted and a holder attachment portion for the attachment to said first attachment unit, and
said pressing body has a pressing portion for applying a load to a sample and a pressing body attachment portion for the attachment to said second attachment unit, **characterized by** further comprising a bag body in which a first hole through which said holder attachment portion penetrates and a second hole through which said pressing body attachment portion penetrates are created, wherein
said pressing body, said sample mounting base and a sample are arranged within said bag body.

2. The sample odor testing device according to Claim 1, **characterized in that**
said bag body is made of a transparent resin, and
said sample mounting base and said pressing body are made of a resin.

3. The sample odor testing device according to Claim 1 or 2, **characterized by** further comprising an XY stage, wherein
said sample holder can be attached to said first attachment unit with said XY stage in between.

4. The sample odor testing device according to any of Claims 1 through 3, **characterized in that**
the form of said sample mounting base is a disc having a diameter that is 1.3 times or more greater and 1.7 times or less greater than the diameter of the sample, and a trench having a depth that is 10% or greater and 20% or smaller of the height of the sample is created on the upper surface of the disc, and
said pressing portion has a height that is 0.5 times or more greater and 1.5 times or less greater than the height of the sample.

5. A test retainer to be used in a sample odor testing device, comprising:

a first attachment unit to which a sample holder is to be attached; and
a second attachment unit to which a pressing body is to be attached, **characterized by** comprising:

a sample holder having a sample mounting base on which a sample is to be mounted and a holder attachment portion for the attachment to said first attachment unit;

a pressing body having a pressing portion for applying a load to a sample and a pressing body attachment portion for the attachment to said second attachment unit; and

a bag body in which a first hole through which said holder attachment portion penetrates and a second hole through which said pressing body attachment portion penetrates are created.

6. A sample odor examination method to be used for a sample odor testing device, comprising:

a first attachment unit to which a sample holder is to be attached; and

a second attachment unit to which a pressing body is to be attached, wherein

said sample holder has a sample mounting base on which a sample is to be mounted and a holder attachment portion for the attachment to said first attachment unit, and

said pressing body has a pressing portion for applying a load to a sample and a pressing body attachment portion for the attachment to said second attachment unit, **characterized by** comprising:

a preparation step of preparing a bag body in which a first hole through which said holder attachment portion penetrates and a second hole through which said pressing body attachment portion penetrates are created;

an arrangement step of arranging said pressing portion, said sample mounting base and a sample within said bag body so that said sample holder is attached to said first attachment unit, and at the same time, said pressing body is attached to said second attachment unit;

an examination step of moving said sample holder and/or said pressing body; and

an analysis step for introducing a gas that exists within said bag body into an analyzing device.

# FIG. 1

FIG. 2

FIG. 3

FIG. 4

FIG. 5

# FIG. 6

# FIG. 7

# FIG. 8

**INTERNATIONAL SEARCH REPORT**

International application No.

PCT/JP2014/058796

A. CLASSIFICATION OF SUBJECT MATTER
*G01N1/00*(2006.01)i, *G01N1/22*(2006.01)i, *G01N30/04*(2006.01)i, *G01N30/72*
(2006.01)n

According to International Patent Classification (IPC) or to both national classification and IPC

B. FIELDS SEARCHED

Minimum documentation searched (classification system followed by classification symbols)
G01N1/00, G01N1/22, G01N30/04, G01N30/72

Documentation searched other than minimum documentation to the extent that such documents are included in the fields searched
Jitsuyo Shinan Koho          1922–1996   Jitsuyo Shinan Toroku Koho   1996–2014
Kokai Jitsuyo Shinan Koho    1971–2014   Toroku Jitsuyo Shinan Koho   1994–2014

Electronic data base consulted during the international search (name of data base and, where practicable, search terms used)
JSTPlus/JMEDPlus/JST7580(JDreamIII)

C. DOCUMENTS CONSIDERED TO BE RELEVANT

| Category* | Citation of document, with indication, where appropriate, of the relevant passages | Relevant to claim No. |
|---|---|---|
| Y | Yoshiyuki OKAMURA, Naoshi KAKIO, Toshie SEZAKI, "New Evaluation Method of Food Flavor Release by Flavor Analysis and Texture", Shimadzu Review, 30 September 2012 (30.09.2012), vol.69, no.1/2, pages 85 to 95 | 1-6 |
| Y | JP 2009-162731 A  (Nippon Medical School), 23 July 2009 (23.07.2009), entire text; all drawings (Family: none) | 1-6 |
| Y | JP 2013-064691 A  (National Agriculture and Food Research Organization), 11 April 2013 (11.04.2013), paragraphs [0006], [0049] (Family: none) | 2 |

[×]  Further documents are listed in the continuation of Box C.      [ ]   See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 09 June, 2014 (09.06.14) | 24 June, 2014 (24.06.14) |

| Name and mailing address of the ISA/<br>Japanese Patent Office | Authorized officer |
|---|---|
| Facsimile No. | Telephone No. |

Form PCT/ISA/210 (second sheet) (July 2009)

**INTERNATIONAL SEARCH REPORT**

| International application No. |
| --- |
| PCT/JP2014/058796 |

C (Continuation).  DOCUMENTS CONSIDERED TO BE RELEVANT

| Category* | Citation of document, with indication, where appropriate, of the relevant passages | Relevant to claim No. |
| --- | --- | --- |
| A | Sachiko ODAKE, "Shokuhin Soshakuchu no Koki Flavor Release Kenkyu no Kiso to sono Sokutei Jitsurei no Shokai", Journal of Cookery Science of Japan, 2008, vol.41, no.2, 84 to 92 | 1-6 |
| A | WO 2012/001314 A1  (Numero de la demande internationale), 05 January 2012 (05.01.2012), abstract & EP 2589038 A | 1-6 |
| A | JP 03-229133 A  (Sumitomo Metal Industries, Ltd.), 11 October 1991 (11.10.1991), fig. 1, 2 (Family: none) | 1-6 |
| A | JP 2007-240214 A  (Independent Administrative Institution National Institute for Materials Science), 20 September 2007 (20.09.2007), paragraph [0012]; fig. 1 (Family: none) | 1-6 |
| A | JP 2002-005795 A  (Haarmann & Reimer GmbH), 09 January 2002 (09.01.2002), entire text; all drawings & US 2001/0045475 A1     & EP 1150269 A1 & DE 10020617 A | 1-6 |
| A | Shimazu Kogata Takujo Shikenki EZTest ni yoru Shokupan no Danryokusei Shiken, SIMADZU CUSTOMER SUPPORT CENTER NEWS - for MATERIAL TESTING, Shimazu Shiken CSC News, no.63 | 1-6 |

Form PCT/ISA/210 (continuation of second sheet) (July 2009)

**EP 2 995 923 A1**

**Patent documents cited in the description**

- JP 2012251901 A

**Non-patent literature cited in the description**

- Measurement of Flavor Released During Chewing of a Food Product. *Chemistry and Biology,* 2009, vol. 47 (9), 624-629